Europäisches Patentamt

European Patent Office

Office européen des brevets

(11) Veröffentlichungsnummer: 0 342 337
A2

(12) EUROPÄISCHE PATENTANMELDUNG

(21) Anmeldenummer: 89105360.5

(22) Anmeldetag: 25.03.89

(51) Int. Cl.⁴: G01B 11/02

(30) Priorität: 17.05.88 DE 3816755

(43) Veröffentlichungstag der Anmeldung:
23.11.89 Patentblatt 89/47

(84) Benannte Vertragsstaaten:
BE CH DE FR GB IT LI NL SE

(71) Anmelder: FRAUNHOFER-GESELLSCHAFT
ZUR FÖRDERUNG DER ANGEWANDTEN
FORSCHUNG E.V.
Leonrodstrasse 54
D-8000 München 19(DE)

(72) Erfinder: Arnold, Walter K., Dr.
Albert-Weisgerber-Allee 17
D-6670 St. Ingbert(DE)
Erfinder: Paul, Michael
Hans-Peter Hellenthal Strasse 19
D-6670 St. Ingbert(DE)

(74) Vertreter: Rackette, Karl, Dipl.-Phys. Dr.-Ing
Kaiser-Joseph-Strasse 179 Postfach 1310
D-7800 Freiburg(DE)

(54) Vorrichtung zum berührungslosen Erfassen, der durch Ultraschallwellen verursachten Oberflächenauslenkung eines Prüflings.

(57) Eine Vorrichtung zum berührungslosen Erfassen der durch Ultraschallwellen verursachten Oberflächenauslenkung eines Prüflings verfügt über einen Laser (1) zur Erzeugung eines Lichtflecks (6) auf der Oberfläche (4) des Prüflings (5). Das vom Lichtfleck (6) reflektierte Licht speist einen Referenzarm (16) und einen Verzögerungsarm (17) einer Interferometeranordnung (9), deren Ausgangslicht einen Photodetektor (15) beaufschlagt. Im Verzögerungsarm (17) der Interferometeranordnung (9) ist eine frequenzverschiebende Zelle (20) angeordnet, mit deren Hilfe ein Trägersignal am Photodetektorausgang erzeugt wird, das infolge der Oberflächenauslenkung des Prüfkörpers (5) phasenmoduliert ist. In einer Demodulationsstufe (29) werden tieferfrequente Störsignale der Phasenmodulation vom Nutzsignal der höherfrequenten Ultraschallwellen (8) getrennt.

Fig. 1

# Vorrichtung zum berührungslosen Erfassen der durch Ultraschallwellen verursachten Oberflächenauslenkung eines Prüflings

Die Erfindung betrifft eine Vorrichtung zum berührungslosen Erfassen der durch Ultraschallwellen verursachten Oberflächenauslenkung eines Prüflings, mit einem ein monochromatisches, kohärentes Abtaststrahlbündel für die Prüflingsoberfläche erzeugenden Laser, dessen Lichtfleck auf der Prüflingsoberfläche mit Hilfe einer Abbildungsoptik einerseits über einen Referenzarm und andererseits über einen Verzögerungsarm einer Interferometeranordnung auf einen Photodetektor mit einer nachgeschalteten Auswerteelektronik abgebildet ist.

Eine derartige Vorrichtung ist in der DE-OS 24 57 253 beschrieben und dient insbesondere zum berührungslosen Ultraschallempfang von hocherhitztem und/oder schnell durchlaufendem Gut, zum Beispiel Grobblechen. Das von der rauhen Oberfläche des Prüflings reflektierte Licht wird mit Hilfe eines teildurchlässigen Spiegels auf zwei unterschiedlich lange Interferometerarme aufgeteilt und anschließend zur Interferenz gebracht, um von dem Photodetektor erfaßt zu werden. Dabei wird der Lichtfleck auf den Prüfling möglichst mit gleicher Vergrößerung über die beiden Arme auf den Photodetektor abgebildet. Bei dem bei der bekannten Vorrichtung eingesetzten Interferometertyp handelt es sich um ein Laufzeitinterferometer, das sich durch ein hohes Lichtsammelvermögen auszeichnet, so daß ein Einsatz der bekannten Vorrichtung auch an rauhen Oberflächen problemlos möglich ist. Da aber die Lichtwellen beider Arme mit einer bestimmten Phasenbeziehung interferieren müssen, ergeben sich beim Betrieb der bekannten Vorrichtung unter Realbedingungen erhebliche Schwierigkeiten. Schwankungen der Wegdifferenz beider Arme, wie sie zum Beispiel durch Gebäudeerschütterungen, thermische Schwankungen und sonstige Vibrationen entstehen, müssen auf einen Bruchteil der Lichtwellenlänge reduziert werden. Bei der bekannten Vorrichtung wird dazu die Länge des Verzögerungsarms interferometrisch gemessen und durch ein Stell- oder Regelelement entsprechend nachgestellt, um Schwankungen des Spiegels des Interferometers zu kompensieren. Das aufwendige Kompensationsverfahren durch automatisches Verstellen der Spiegel im Verzögerungsarm des Interferometers gestattet es jedoch nur teilweise, die störenden Einflüsse zu unterdrücken.

Ausgehend von diesem Stand der Technik liegt der Erfindung die Aufgabe zugrunde, eine Vorrichtung der eingangs genannten Art so zu verbessern, daß der Einfluß von Störgrößen auf die Interferometeranordnung insbesondere durch Erschütterungen weitgehend unterdrückt wird und gleichzeitig eine empfindliche und reproduzierbare Signalauswertung bei einem hohen Lichtsammelvermögen erfolgt.

Diese Aufgabe wird erfindungsgemäß dadurch gelöst, daß in wenigstens einem der beiden Arme der Interferometeranordnung eine frequenzverschiebende Zelle angeordnet ist und daß die Auswerteelektronik eine Demodulationsschaltung aufweist, die mit dem durch die Oberflächenauslenkung des Prüflings phasenmodulierten Trägersignal am Photodetektorausgang beaufschlagbar ist und den den Ultraschallwellen zugeordneten Nutzsignalanteil von tieferfrequenten Störsignalen trennt.

Bei der frequenzverschiebenden Zelle kann es sich um eine nach dem akusto-optischen Effekt arbeitende Bragg-Zelle oder um eine nach dem elektro-optischen Effekt arbeitende Zelle handeln. Wenn das betreffende Lichtbündel in einem an einen hochfrequenten Trägergenerator angeschlossenen A/O-Deflektor mit der dort erzeugten akustischen Welle wechselwirkt, erfolgt eine Verschiebung der Lichtfrequenz um die Frequenz des Trägergenerators. Wenn zum Frequenzversatz der elektro-optische Effekt ausgenutzt wird, erfolgt eine Wechselwirkung des Lichtes mit einem von außen angelegten hochfrequenten elektrischen Feld innerhalb eines Mediums.

Wenn das Licht eines der beiden Arme, das heißt entweder das Hauptstrahlbündel im Verzögerungsarm oder das Referenzstrahlbündel im Referenzarm gegenüber dem Licht des anderen Armes frequenzversetzt wird, liefert der über beide Lichtwege beaufschlagte Photodetektor neben einem Gleichstromanteil ein mit der Differenzfrequenz der beiden Interferometerarme oder Lichtarme alternierendes sinusförmiges Trägersignal, auf welches alle Schwankungen der Wegdifferenz der beiden Arme in einer dem Interferometer charakteristischen Weise als Phasenschwankungen aufmoduliert sind. Die Frequenz des Trägersignals beträgt beispielsweise 200 MHz. In einer dem Photodetektor nachgeschalteten elektronischen Demodulationsstufe werden die durch Störungen bedingten tieffrequenten Modulationssignale kompensiert, während das hochfrequente, den Ultraschallauslenkungen der Prüflingsoberfläche entsprechende Modulationssignal zur weiteren Auswertung ausgegeben wird.

Bei einem vorteilhaften Ausführungsbeispiel der Erfindung kann das Interferometer durch Verändern der Länge des Verzögerungsarms jeder Schallfrequenz optimal angepaßt werden. Insbesondere können bei kurzen Verzögerungszeiten auch hohe Bandweiten bei hohen Frequenzen erzielt werden. Die Verzögerung beträgt vorzugsweise etwa eine halbe Periode des Ultraschallsignals. Eine Verlängerung oder Verkürzung des Verzögerungsarms läßt sich auf einfache Weise erreichen, wenn die Abstände durch Verstellen der Umlenkspiegel oder Prismen des Verzögerungsarms des Interferometers verändert werden.

Wenn der Verzögerungsarm ganz oder teilweise als Lichtleiter mit einem Medium dessen Brechungsindex größer als 1 ist realisiert wird, ist es möglich, die Vorrichtung besonders kompakt aufzubauen. Außerdem kann auf diese Weise über beide Arme des Interferometers ein gleicher Abbildungsmaßstab auf einfache Weise gewährleistet werden.

Die an den Photodetektor angeschlossene Auswerteelektronik verfügt über einen mit dem Trägersignal des Photodetektors und dem Oszillatorsignal eines spannungsgesteuerten lokalen Oszillators beaufschlagten Mischer, dessen Ausgang einerseits mit einem Bandpaß für das den Ultraschallwellen im Prüfling zugeordnete Nutzsignal und andererseits mit einer Regelschleife verbunden ist, durch die Frequenz des lokalen Oszillators zur Unterdrückung tieffrequenter Störungen regelbar ist. Bei einem bevorzugten Ausführungsbeispiel ist die Regelschleife mit einem Störsignale bis zu 200 kHz verarbeitenden Steuerspannungsgenerator und Verstärker versehen.

Nachfolgend werden Ausführungsbeispiele der Erfindung anhand der Zeichnung näher erläutert. Es zeigen:

Fig. 1 ein Ausführungsbeispiel einer Vorrichtung gemäß der Erfindung in einer schematischen Darstellung,

Fig. 2 ein weiteres Ausführungsbeispiel der Erfindung mit einem einen Lichtleiter aufweisenden Verzögerungsarm und

Fig. 3 ein Blockschaltbild einer Schaltung zur elektronischen Demodulation des vom Photodetektor gelieferten Ausgangssignals.

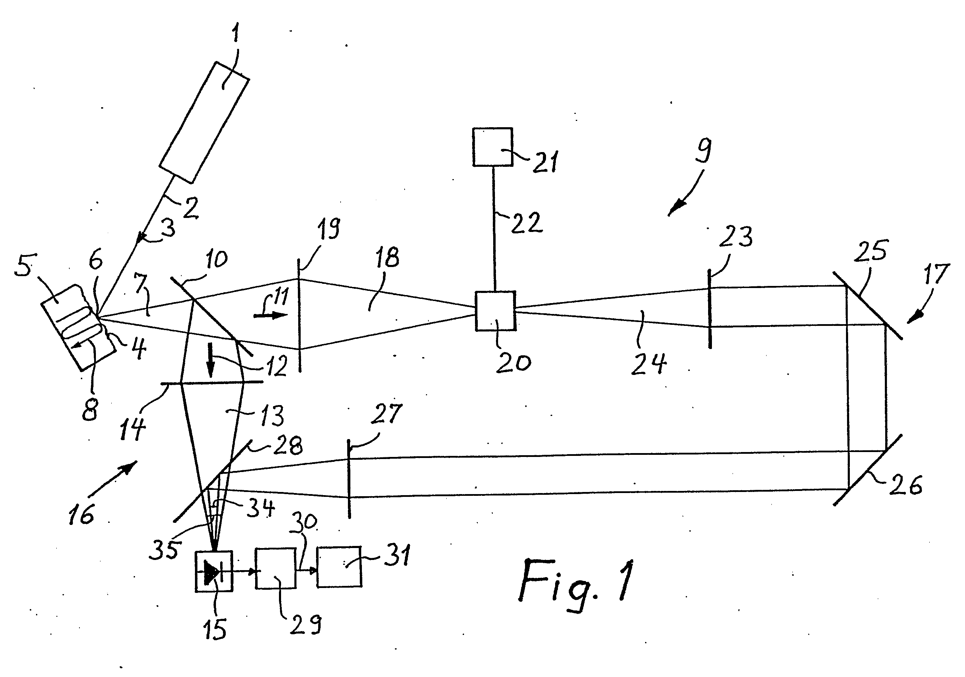

Die in Fig. 1 dargestellte Vorrichtung zum berührungslosen Erfassen von Ultraschallwellen verfügt über einen Laser 1, der ein kohärentes monochromatisches Abtaststrahlbündel 2 erzeugt, das in Richtung eines Pfeils 3 die rauhe Oberfläche 4 eines Prüflings 5 beaufschlagt und im Aufprallbereich des Abtaststrahlbündels einen Lichtfleck 6 erzeugt. Im Bereich des Lichtflecks 6 wird das Laserlicht als Meßstrahlbündel 7 diffus reflektiert.

Der die rauhe Oberfläche 4 aufweisende Prüfling 5 ist mit Ultraschallwellen 8 beaufschlagt, die in der Zeichnung symbolisch dargestellt sind. Die Vorrichtung zum berührungslosen Erfassen von Ultraschallwellen dient dazu, die Amplitude und das Frequenzspektrum der Ultraschallwellen 8 berührungslos zu messen. Die zur Erzeugung der Ultraschallwellen 8 erforderliche Ultraschallanregung erfolgt optisch, elektromechanisch oder akustisch.

Insbesondere ist es möglich, die Ultraschallwellen 8 mit Hilfe kurzer Laserimpulse zu erzeugen, die von einem in der Zeichnung nicht dargestellten Hochleistungslaser erzeugt werden können. Eine Schallerzeugung durch kurze Laserimpulse hat den Vorteil, ebenfalls berührungslos durchführbar zu sein.

Durch das Bestimmen des Frequenzgangs mit Hilfe der in Fig. 1 dargestellten Vorrichtung können Informationen über den Prüfling gewonnen werden, um dessen Materialeigenschaften genauer zu studieren.

Das diffus von der rauhen Oberfläche 4 reflektierte Meßstrahlbündel 7 speist eine Interferometeranordnung 9 mit Bauelementen eines Laufzeitinterferometers und Bauelementen eines Heterodyneinterferometes, die nachfolgend näher beschrieben werden.

Das Meßstrahlbündel 7 beaufschlagt beim Eintritt in die Interferometeranordnung 9 einen ersten optischen Strahlteiler 10, durch den ein Teil des Meßstrahlbündels 7 quer zu der durch einen Pfeil 11 veranschaulichten Ausbreitungsrichtung des an der Oberfläche 4 reflektierten Meßstrahlbündels 7 in Richtung eines Pfeils 12 als Referenzstrahlbündel 13 ausgekoppelt wird. Das Licht des Referenzstrahlbündels 13 durchquert ein erstes Linsensystem 14, mit dessen Hilfe der Lichtfleck 6 auf einen Photodetektor 15 abgebildet wird. Das Referenzstrahlbündel 13 bildet den Referenzarm 16 der Interferometeranordnung 9, die weiterhin über einen Verzögerungsarm 17 verfügt, der nachfolgend beschrieben ist.

Der vom optischen Strahlteiler 10 durchgelassene Teil des diffus reflektierten Meßstrahlbündels 7 beaufschlagt in Richtung des Pfeiles 11 als Hauptstrahlbündel 18 den Verzögerungsarm 17 der Interferometeranordnung 9. Der Verzögerungsarm 17 ist dabei so ausgebildet, daß der Lichtfleck 6 mit einem dem Abbildungsmaßstab des Referenzarmes 16 entsprechenden Abbildungsmaßstab auf den Photodetektor 15 abgebildet wird.

Das Licht des Hauptstrahlbündels 18 wird mit Hilfe eines zweiten Linsensystems 19 aufgefangen, das den Lichtfleck 6 auf der Oberfläche 4 des Prüflings 5 in eine Bragg-Zelle 20 abbildet, die in der bei Heterodyneinterferometern üblichen Weise dazu dient, einen Frequenzversatz oder Wellenlängenversatz des Hauptstrahlbündels 18 zu bewirken. Die Bragg-Zelle 20 ist ein A/O-Deflektor, der den akusto-optischen Effekt ausnutzt, um einen Frequenzversatz zu erreichen, dessen Größe von der Frequenz eines hochfrequenten Trägergenerators 21 abhängig ist, der über einen Leitung 22 mit der Bragg-Zelle 20 verbunden ist. Statt der Bragg-Zelle 20 kann auch eine nach dem elektro-optischen Effekt arbeitende Zelle verwendet werden. Die Frequenz des Trägergenerators 21 beträgt beispielsweise 50 bis 200 MHz.

Auf der dem zweiten Linsensystem 19 gegenüberliegenden Seite der Bragg-Zelle 20 ist ein drittes Linsensystem 23 vorgesehen, durch das das divergent aus der Bragg-Zelle 20 austretende frequenzverschobene Licht gesammelt und kollimiert wird. Das kollimierte frequenzverschobene Hauptstrahlbündel 24 wird mit Hilfe eines ersten Umlenkspiegels 25 sowie mit Hilfe eines zweiten Umlenkspiegels 26 zweimal umgelenkt und parallel verschoben zu einem vierten Linsensystem 27 geleitet. Statt Umlenkspiegel 25, 26 können selbstverständlich Prismen oder andere optische Komponenten verwendet werden, die den Aufbau eines Verzögerungsarms 17 gestatten. Die optischen Komponenten 23 bis 27 dienen dazu, das in die Bragg-Zelle 20 abgebildete Bild des Lichtflecks 6 auf den Photodetektor 15 abzubilden. Dazu ist weiterhin noch ein zweiter Strahlteiler 28 vorgesehen, mit dessen Hilfe das Licht des frequenzverschobenen Hauptstrahlbündels 24 in den Lichtweg des Referenzstrahlbündels 13 eingekoppelt wird.

Aus der obigen Beschreibung ergibt sich, daß eine Abbildung des Lichtflecks 6 auf den Photodetektor 15 einerseits über den Referenzarm 16 und andererseits über den Verzögerungsarm 17 mit dem gleichen Abbildungsmaßstab erfolgt. Es versteht sich von selbst, daß die Fortpflanzungszeit des Lichtes im Verzögerungsarm 17 größer ist als die zur Fortpflanzung im Referenzarm 16 benötigte Zeit. Vorzugsweise ist die Verzögerung im Verzögerungsarm 17 so gewählt, daß ihre Dauer der Dauer einer halben Periode des zu erfassenden Ultraschalls in etwa entspricht.

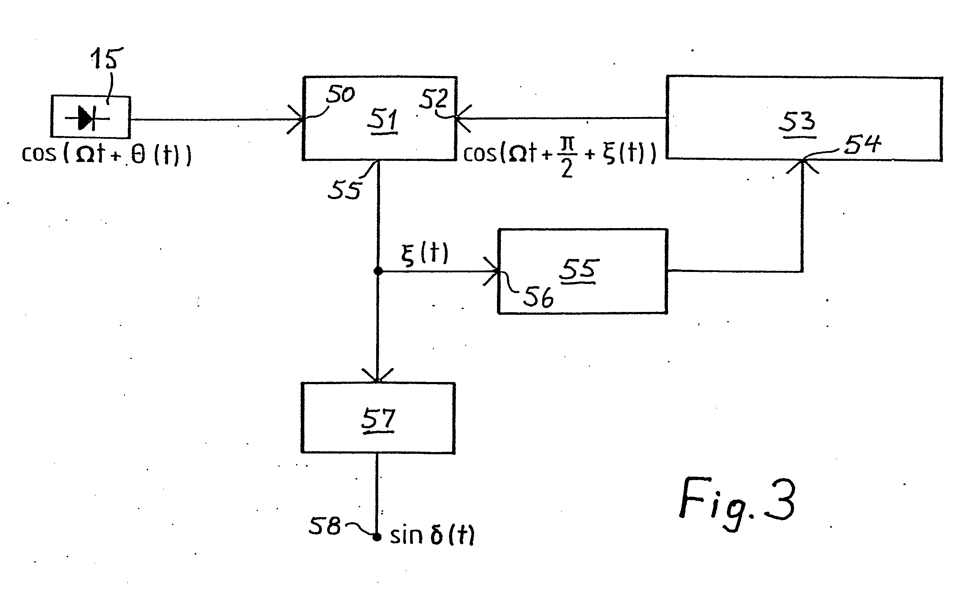

Der Ausgang des Photodetektors 15 ist mit einer in Fig. 3 als Blockschaltbild dargestellten Demodulationsstufe 29 verbunden, die ihrerseits über eine Leitung 30 ein Nutzsignal für eine Auswerteeinheit 31 liefert.

Der Photodetektor 15 liefert neben einem Gleichstromanteil ein mit der Differenzfrequenz der beiden Interferometerarme 16, 17 alternierendes sinusförmiges Trägersignal, auf welches alle Schwankungen der Wegdifferenz der beiden Arme 16, 17 in einer dem Interferometer charakteristischen Weise als Phasenschwankungen aufmoduliert sind. In der Demodulationsstufe 29 werden die durch Störungen bedingten tieffrequenten Modulationssignale kompensiert, um das hochfrequente, den Ultraschallauslenkungen der Oberfläche 4 des Prüflings 5 entsprechende Modulationssignal an die Auswerteeinheit 31 auszugeben.

Wenn der Prüfling 5 nicht mit Ultraschall beaufschlagt ist, überlagern sich die der Rauhigkeit der Oberfläche 4 an der Stelle des Lichtflecks 6 entsprechenden Phasenfronten 34, 35, die in Fig. 1 in der Nähe des Photodetektors 15 eingezeichnet sind, konstruktiv und der Photodetektor 15 liefert ein hochfrequentes Trägersignal mit der Frequenz des Trägergenerators 21. Wenn der Prüfling 5 mit Ultraschall beaufschlagt wird, wird das vom Photodetektor 15 erzeugte und der Demodulationsstufe 29 zugeführte Trägersignal derart phasenmoduliert, daß die Phasenmodulation der Auslenkungsdifferenz der Oberfläche 4 am Ort des Lichtflecks 6 zwischen zwei verschiedenen Zeitpunkten proportional ist. Die Zeitspanne zwischen den beiden Zeitpunkten ist dabei gleich der Laufzeitdifferenz des Lichtes in den Interferometerarmen 16 und 17. Die erfaßbaren Frequenzkomponenten (Bandweite) der Auslenkungsdifferenz sind dabei ebenfalls durch die unterschiedlich lange Laufzeit in den beiden Interferometerarmen 16 und 17 bedingt. Tieffrequente Störsignale werden dabei schon systembedingt abgeschwächt und in der nachfolgenden Demodulationsstufe 29 nochmals weiter unterdrückt, wie sich aus der Beschreibung zur Fig. 3 ergibt.

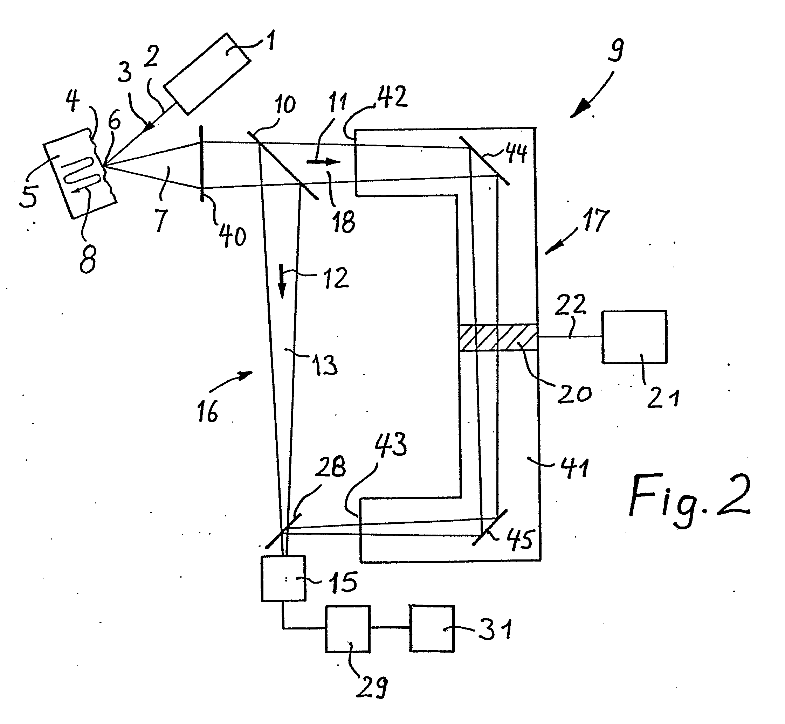

Fig. 2 zeigt ein zweites Ausführungsbeispiel für die Vorrichtung zum berührungslosen Erfassen von Ultraschallwellen, wobei in Fig. 2 Bauteile, die mit denjenigen der Fig. 1 übereinstimmen, die gleichen Bezugszeichen aufweisen und nicht nochmals gesondert im Zusammenhang mit Fig. 2 beschrieben werden.

Im Gegensatz zum Ausführungsbeispiel gemäß Fig. 1 ist ein vereinfachtes Linsensystem 40 vorgesehen, das einen Teil des diffus reflektierten Meßstrahlbündels 7 empfängt und den Lichtfleck 6 auf dem Prüfling 5 auf den Photodetektor 15 abbildet. Die Abbildung erfolgt dabei über zwei verschiedene Wege, nämlich einerseits den Referenzarm 16 und andererseits den Verzögerungsarm 17. Die Aufspaltung des Lichts des Meßstrahlbündels in die verschiedenen Wege erfolgt mit Hilfe des Strahlteilers 10, der als teildurchlässiger Spiegel ausgebildet ist.

Während die Abbildung über den Referenzarm 16 durch das Medium Luft hindurch stattfindet, führt der Lichtweg im Verzögerungsarm 17 durch ein Medium 41 mit einem Brechungsindex, der größer als 1 ist, so daß die Laufzeit verlängert wird, aber gleichzeitig ein gleicher Abbildungsmaßstab gewährleistet ist. Das Medium 41 besteht zweckmäßigerweise aus einem Lichtleiter mit einer Lichteintrittsfläche 42 und einer Lichtaustrittsfläche 43. Die Lichteintrittsfläche 42 ist dabei so angeordnet, daß das vom Strahlteiler 10 in Richtung des Pfeils 11 ankommende Licht des Hauptstrahlbündels 18 aufgefangen werden kann. Die Lichtaustrittsfläche 43 ist so angeordnet, daß das Licht des frequenzverschobenen Hauptstrahlbündels den zweiten Strahlteiler 28 beaufschlagt. Innerhalb des Mediums 41 erkennt man weiterhin zwei Umlenkspiegel 44, 45, die funktionsmäßig den Umlenkspiegeln 25 und 26 entsprechen.

Wie man in Fig. 2 weiter erkennt, ist im Medium 41 die an den hochfrequenten Trägergenerator 21 angeschlossene frequenzverschiebende Zelle, insbesondere die Bragg-Zelle 20, eingebracht. Die Funktionsweise der in Fig. 2 dargestellten Vorrichtung ist analog der im Zusammenhang mit Fig. 1 beschriebenen Funktionsweise. Insbesondere erfolgt eine Überlagerung des den Verzögerungsarm 17 durchquerenden Lichtes mit dem über den Referenzarm 16 eingespeisten Licht am Strahlteiler 28. Analog zu der in Fig. 1 beschriebenen Vorrichtung liefert der Photodetektor 15 ein hochfrequentes Trägersignal, auf welches Schwankungen der Wegdifferenz der Arme 16, 17 in Form von Phasenschwankungen aufmoduliert sind. Eine Möglichkeit der Demodulation ergibt sich aus dem Blockschaltbild gemäß Fig. 3.

Das Ausführungsbeispiel gemäß Fig. 2 hat den Vorteil, daß die Abbildung des Lichtflecks 6 auf den Photodetektor 15 durch ein gegenüber der in Fig. 1 skizzierten Ausführung vereinfachtes Linsensystem 40 erfolgt, was durch das Medium mit einem Brechungsindex von mehr als 1 im Verzögerungsarm 17 ermöglicht wird.

In Fig. 3 ist ein Blockschaltbild einer vorteilhaften Ausführungsform der Demodulationsstufe 29 innerhalb der Auswerteelektronik der Vorrichtung dargestellt. Wie man in Fig. 3 erkennt, ist der Photodetektor 15 mit dem ersten Mischeingang 50 einer Mischstufe 51 verbunden. Der zweite Mischeingang 52 der Mischstufe 51 ist mit dem Ausgang eines auf die Trägerfrequenz einstellbaren spannungsgesteuerten lokalen Oszillators 53 verbunden. Der Eingang 54 zur Steuerung der Oszillatorfrequenz des Oszillators 53 erhält das Steuersignal einer Regelschleife 55, mit deren Hilfe die Oszillatorfrequenz zur Unterdrückung tieffrequenter Störungen im Zwischenfrequenzausgangssignal der Mischstufe 51 nachgeregelt wird. Das am Ausgang 55 der Mischstufe 51 zur Verfügung stehende Zwischenfrequenzsignal speist einerseits den Eingang 56 der Regelschleife 55 und andererseits einen Bandpaß 57, der an seinem Ausgang 58 das erwünschte den Ultraschallwellen 8 zugeordnete Nutzsignal frei von tieffrequenten durch die Regelschleife 55 unterdrückten Störsignalen liefert.

Der Ausgang des Photodetektors 15 liefert das dem Eingang 50 der Mischstufe 51 zugeführte Trägersignal mit der Frequenz Omega des Trägergenerators 21. Dieses Signal ist phasenmoduliert mit dem Nutzsignal Delta(t) und dem Störsignal Xi(t), so daß das gesamte phasenmodulierte Signal Theta(t) = Delta(t) + Xi(t) ist. In der Regelschleife 55 werden die tieffrequenten Störsignale xi(t) erfaßt und zur Frequenzsteuerung des Oszillators 53 so verwandt, daß die Störsignale am Ausgang 55 der Mischstufe, das heißt in deren Zwischenfrequenzsignal unterdrückt sind. Durch die Überlagerung des Trägersignals und des Signals des Oszillators wird das Zwischenfrequenzsignal erzeugt und schließlich das Nutzsignal über den Bandpaß 57 detektiert.

## Ansprüche

1. Vorrichtung zum berührungslosen Erfassen der durch Ultraschallwellen verursachten Oberflächenauslenkung eines Prüflings mit einem ein monochromatisches, kohärentes Abtaststrahlbündel für die Prüflingsoberfläche erzeugenden Laser, dessen Lichtfleck auf der Prüflingsoberfläche mit Hilfe einer Abbildungsoptik einerseits über einen Referenzarm und andererseits über einen Verzögerungsarm einer Interferometeranordnung auf einen Photodetektor mit einer nachgeschalteten Auswerteelektronik abgebildet ist, **dadurch gekennzeichnet**, daß in wenigstens einem der beiden Arme (16, 17) der Interferometeranordnung (9) eine frequenzverschiebende Zelle (20) angeordnet ist und daß die Auswerteelektronik eine Demodulationsschaltung (29) aufweist, die mit dem durch die Oberflächenauslenkung des Prüflings phasenmodulierten Trägersignal (50) am Photodetektorausgang beaufschlagbar ist und den den Ultraschallwellen (8) zugeordneten Nutzsignalanteil (Delta) von tieferfrequenten Störsignalen (Xi) trennt.

2. Vorrichtung nach Anspruch 1, **dadurch gekennzeichnet**, daß die frequenzverschiebende Zelle eine nach dem akusto-optischen Effekt arbeitende Bragg-Zelle (20) ist.

3. Vorrichtung nach Anspruch 1, **dadurch gekennzeichnet**, daß die frequenzverschiebende Zelle (20) eine nach dem elektro-optischen Effekt arbeitende Zelle ist.

4. Vorrichtung nach einem der Ansprüche 1 bis 3, **dadurch gekennzeichnet**, daß der Verzögerungsarm (17) Einrichtungen (25, 26) zum Umlenken des Hauptstrahlbündels (18, 24) aufweist, die zur Veränderung der optischen Länge des Verzögerungsarms (17) verstellbar sind.

5. Vorrichtung nach einem der Ansprüche 1 bis 4, **dadurch gekennzeichnet**, daß der Lichtweg des Verzögerungsarms (17) sich durch ein Medium (41) mit einem Brechungsindex erstreckt, der größer als 1 ist.

6. Vorrichtung nach Anspruch 5, **dadurch gekennzeichnet**, daß der Verzögerungsarm (17) durch einen Lichtleiter (41) gebildet ist.

7. Vorrichtung nach einem der vorstehenden Ansprüche, **dadurch gekennzeichnet**, daß die Auswerteelektronik eine mit dem Trägersignal (50) des Photodetektors (15) und dem Oszillatorsignal eines spannungsgesteuerten lokalen Oszillators (53) beaufschlagte Mischstufe (51) aufweist, deren Ausgang (55) einerseits mit einem Bandpaß (57) für das den Ultraschallwellen im Prüfling (5) zugeordnete Nutzsignal (58) und andererseits mit einer Regelschleife (55) verbunden ist, durch die die Frequenz des lokalen Oszillators (53) zur Unterdrückung tieffrequenter Störungen regelbar ist.

8. Vorrichtung nach Anspruch 7, **dadurch gekennzeichnet**, daß die Regelschleife (55) einen Störsignale bis zu 200 kHz verarbeitenden Steuerspannungsgenerator und Verstärker aufweist.

Fig. 1

EP 0 342 337 A2

Fig.2

EP 0 342 337 A2

$$\cos(\Omega t + \theta(t))$$

$$\cos\left(\Omega t + \frac{\pi}{2} + \xi(t)\right)$$

$$\xi(t)$$

$$\sin \delta(t)$$

Fig. 3